# EUROPEAN PATENT APPLICATION

(11) **EP 4 808 118 A1**
(43) Date of publication of application: **16.09.2026**
(21) Application number: 25305334.2
(22) Date of filing: 13.03.2025
(51) Int. Cl.: H04N 19/117, H04N 19/70, H04N 19/82

(54) **NEURAL NETWORK LOOP FILTER SYNTAX**

(71) Applicant: InterDigital CE Patent Holdings, SAS, 75017 Paris (FR)
(72) Inventor: POIRIER, Tangi, 35235 THORIGNE-FOUILLARD (FR); GALPIN, Franck, 35235 THORIGNE-FOUILLARD (FR); AMEUR, Zoubida, 35510 CESSON SEVIGNE (FR)
(74) Representative: Interdigital

(57) **Abstract**

In various implementations, methods and devices are disclosed that process one or more syntax elements for in-loop filtering a reconstructed image region using a neural network loop filter NNLF. The one or more syntax elements may comprise an identifier of a NNLF model type for the NNLF among a reduced list of five NNLF model types; an indication specifying a size, in log 2 minus 2, in width and height of the image region processed by the NNLF; an indication specifying a size, in log 2 minus 2, in width and height of an extension of the image region processed by the NNLF or an indication specifying a maximum number minus 1 of conditional scaling parameter candidates of the image region processed by the NNLF.

## Description

### BACKGROUND

The present application is related to a method and an apparatus for processing one or more syntax elements for in-loop filtering of a reconstructed image region using a neural network loop filter.

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction. Recent improvements to video compression technology includes a Neural-Network Loop Filter NNLF where the reconstructed images are post-filtered to reduce coding artefacts and improve the rate distortion trade-off.

### BRIEF SUMMARY

In various implementations, methods and devices are disclosed that process one or more syntax elements for in-loop filtering of a reconstructed image region using a neural network loop filter.

Briefly stated, in one embodiment a method of video decoding is disclosed that comprises receiving a syntax structure related to a neural-network loop-filter NNLF, the syntax structure comprising an identifier of a NNLF model type for the NNLF among a list of five NNLF model types; determining a NNLF model type for the NNLF based on the identifier; and decoding an image region, wherein to decode the image region the one or more processors perform in-loop filtering using at least one filter, the at least one filter comprising the NNLF with the NNLF model type.

In one embodiment a method of video encoding is disclosed that comprises determining a neural-network loop-filter NNLF model type for a NNLF; encoding a syntax structure related to a neural-network loop-filter NNLF, the syntax structure comprising an identifier of the NNLF model type for the NNLF among a list of five NNLF model types; and reconstructing an image region, wherein the reconstructing includes in-loop filtering using at least one filter, the at least one filter comprising the NNLF with the NNLF model type.

One or more embodiments also provide an apparatus for video encoding, decoding or rendering comprising one or more processors and at least one memory coupled to said one or more processors, wherein said one or more processors are configured to perform the encoding, decoding or rendering method according to any of the embodiments described herein.

One or more embodiments also provide a computer program comprising instructions which when executed by one or more processors cause the one or more processors to perform the encoding, decoding or rendering method according to any of the embodiments described herein. One or more of the present embodiments also provide a computer readable storage medium having stored thereon instructions for encoding, decoding or rendering a video according to the methods described herein.

One or more embodiments also provide a computer readable storage medium having stored thereon video data generated according to the methods described above. One or more embodiments also provide a method and apparatus for transmitting or receiving the video data generated according to the methods described herein.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a block diagram illustrating an example system according to one or more embodiments of the present disclosure;
FIG. 2 is a block diagram illustrating an example video encoder according to one or more embodiments of the present disclosure;
FIG. 3 is a block diagram illustrating an example video decoder according to one or more embodiments of the present disclosure;
FIG. 4 is a block diagram illustrating an example of loop-filters in video codecs in which the present principles may be implemented;
FIG. 5 is a block diagram illustrating an example of a convolutional Neural Network in a loop-filtering process according to one or more embodiments of the present disclosure;
FIG. 6 is a block diagram illustrating an example of a generic architecture of a Neural Network Loop-Filter NNLF according to one or more embodiments of the present disclosure;
FIG. 7 is a block diagram illustrating an example of a chroma pre-processing according to one or more embodiments of the present disclosure;
FIG. 8(a) is a block diagram illustrating an example of NNPF parameter selection at encoder side according to one or more embodiments of the present disclosure;
FIG. 8(b) is a block diagram illustrating an example of NNPF parameter selection at decoder side according to one or more embodiments of the present disclosure;
FIG. 9 is a block diagram illustrating an example of learning process of a NNPF according to one or more embodiments of the present disclosure;
FIG. 10 is block diagram illustrating a decoding method according to one or more embodiments of the present disclosure; and
FIG. 11 is block diagrams illustrating an encoding method according to one or more embodiments of the present disclosure.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

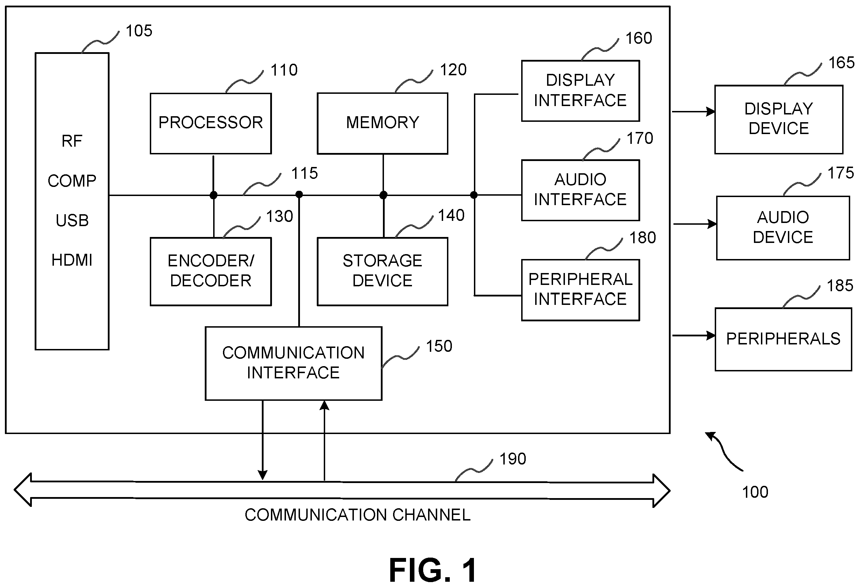

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

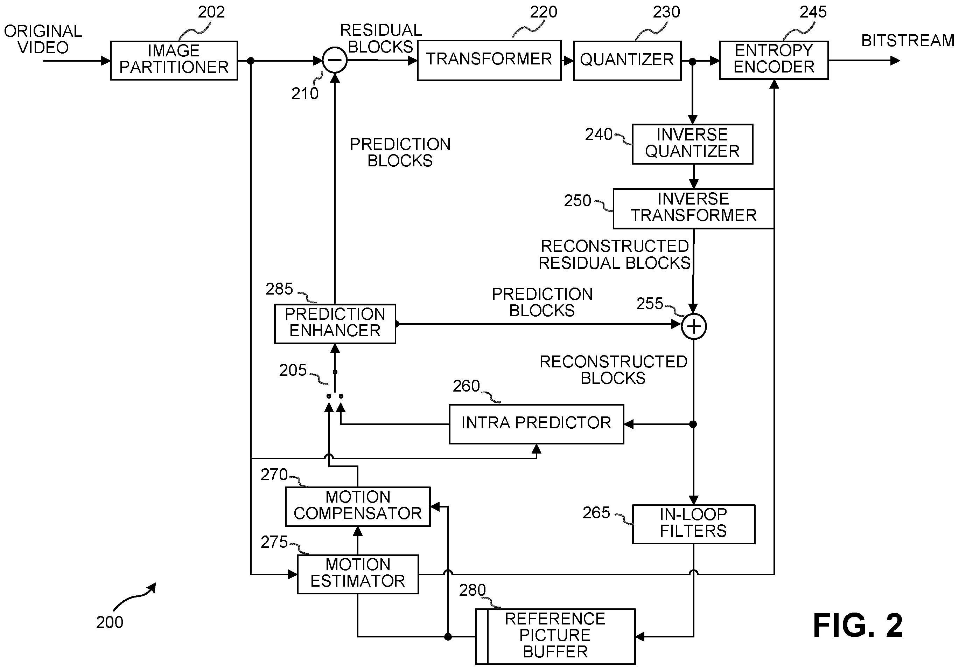

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

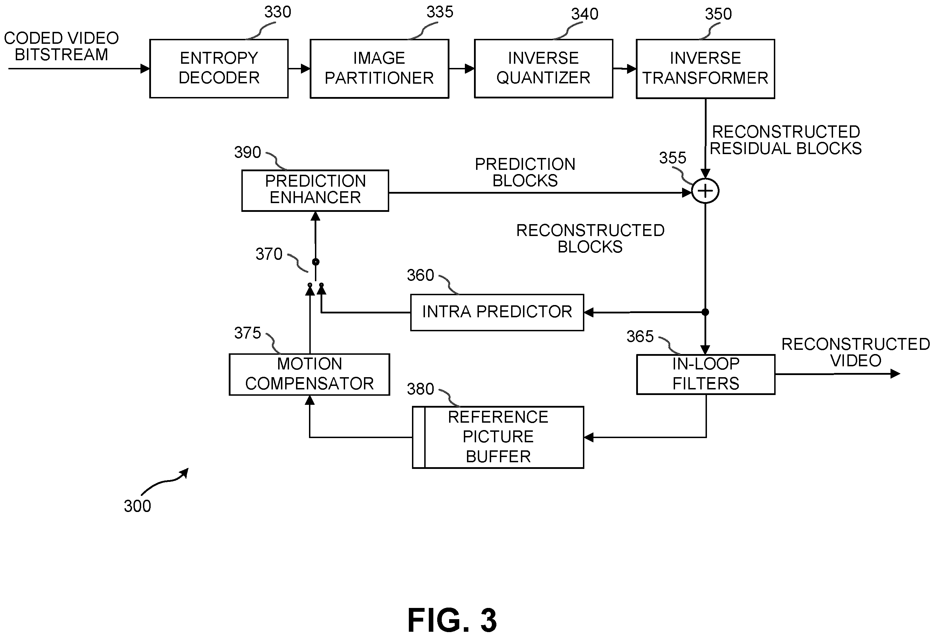

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, *Y*, and chroma components, *U* and V (also denoted herein by *C*)*.*

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

The present principles relate to in-loop filters (e.g., DBF, BIF, SAO, and/or ALF) that may be applied to the reconstructed image (formed by the reconstructed blocks or image region).

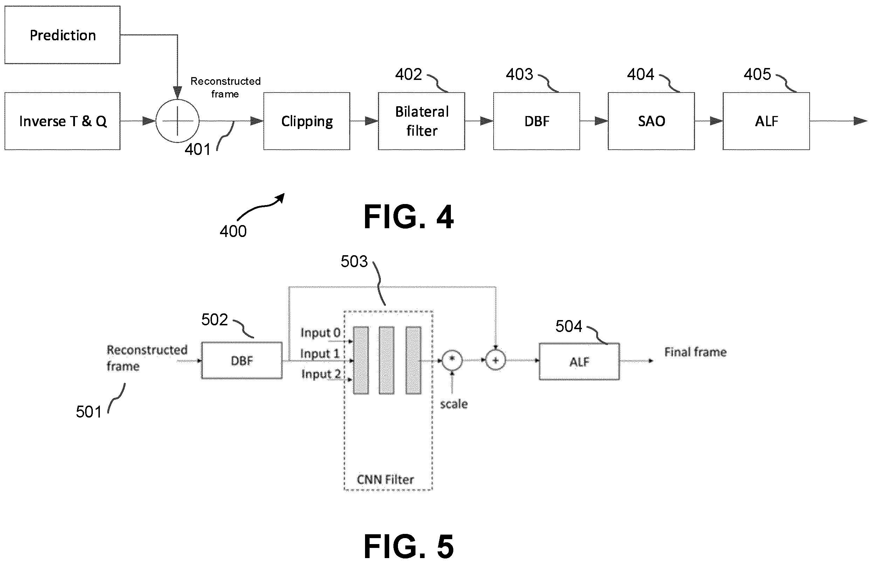

FIG. 4 is a block diagram illustrating an example of loop-filters in video codecs in which the present principles may be implemented. The loop-filters 400 of FIG. 4 are an example of implementation of the in-loop filters 265 of the video encoder of FIG. 2 or of the in-loop filters 365 of the video decoder of FIG. 3. The (in-loop) post-filters 402, 403, 404, 405 applied to the pictures after the image or part of the image have been reconstructed 401. In recent video codecs, such as HEVC or VVC, several filters are applied to the reconstructed samples of the video pictures, aiming at reducing the coding artefacts and reducing the distortion with the original picture. For instance, in HEVC, a deblocking filter (DBF) 403 and a sample-adaptive offset (SAO) filter 404 apply successively to the reconstructed samples 401. In the VVC standard another filter named adaptive loop filter (ALF) 405 that may apply at the very end of the process. During the development phase of VVC, several other supplemental block-based filters were considered as non-limiting examples the bilateral filter (BF) 402, Hadamard filter and Diffusion filter.

An example of successive loop filtering steps, corresponding to the state-of-art video codec, is depicted in FIG. 4. In this example, 4 successive filters are applied, namely Bilateral filter 402, DBF 403, SAO 404 and ALF 405. The output is the filtered reconstructed picture samples.

These different filters are in general based on two main processes (classification and filtering) which can be decomposed as:
1. pixels classification
2. encoder only: determination of filter parameters (ex: DBF, SAO, ALF but not BF)
3. filter parameters coding/decoding (ex: DBF, SAO, ALF but not BF)
4. class-dependent filtering.

Besides, recent improvements to video compression technology further includes Neural Networks compression. Neural-Networks compression is a compression technique where components of the processes are learned from given data. Neural-Networks compression methods are not standardized yet, although MPEG is currently exploring these technologies. Recently, Neural Network based filtering has been introduced, for example in NNVC (Neural Network Video Codec).

In the following, a new post-filter based on Neural Networks (NN) is described that may replace one or several loop-filters or may be added to the existing loop-filters of FIG. 4.

### Feature(s) associated with Neural Network Video Codec are provided herein.

A convolutional NN is added to (or to replace some of) the loop filters, for example after the DBF filter. FIG. 5 is a block diagram illustrating an example of a convolutional Neural Network in a loop-filtering process according to one or more embodiments of the present disclosure. As shown on FIG. 5, the reconstructed frame 501 is processed by the DBF (Deblocking) 502. The output is used as input 1, as well as other inputs (for example the predicted frame, residuals, the partition map, the QP map, etc.) of a CNN Filter 503. The frame is filtered (possibly per block) and a correction is produced. This correction may be modulated by a scale factor and added to the input. Optionally, the ALF filter 540 may be applied on the result and the final frame is output. In this process, the CNN has been learnt offline on a large dataset of blocks.

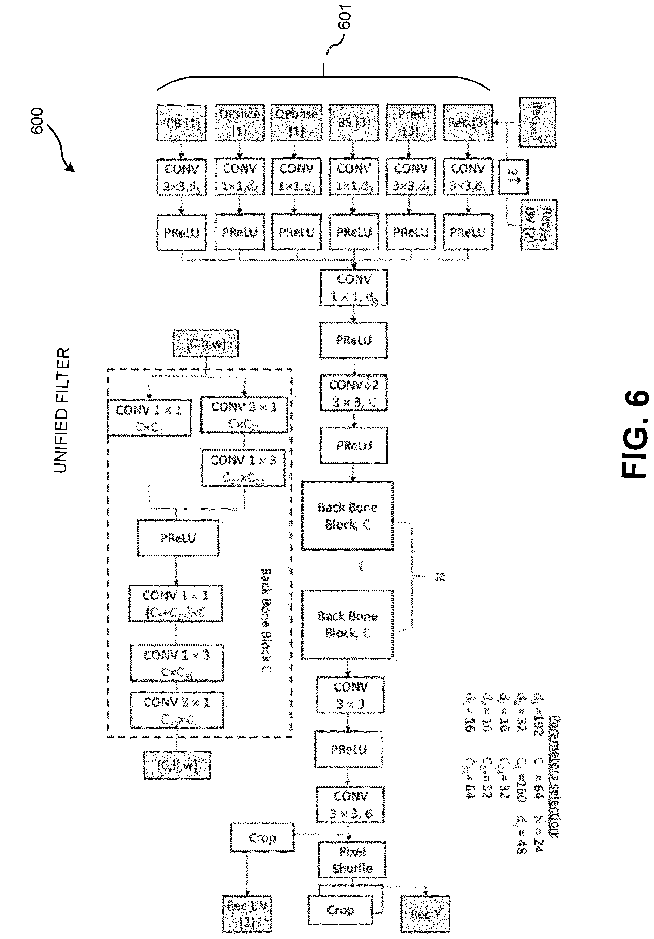

FIG. 6 is a block diagram illustrating an example of a generic architecture of a Neural Network Loop-Filter NNLF according to one or more embodiments of the present disclosure. According to non-limiting examples shown on FIG. 6, the inputs 601 of the NNLF model are:
- Rec: the reconstructed samples, typically before the DBF filter,
- Pred: the prediction samples,
- BS: the boundaries strength, for instance coming from the DBF process,
- QPbase, QPslice: the QP of the sequence, of the block or slice
- IBP: the type of block (intra, inter uni/bi predicted), block with residual or not.

Table 1 shows the IBP values associated to the type of blocks. This value is an input to the NNLF model.

**Table 1: Value associated to the type IBP of the block in NNLF.**

| **Type of the block** | **Value** |
|---|---|
| Intra | 0 |
| N/A | 1 |
| IBC with residual | 2 |
| IBC skip | 3 |
| Uni-Prediction residual | 4 |
| Uni-Prediction skip | 5 |
| Bi-prediction residual | 6 |
| Bi-prediction skip | 7 |

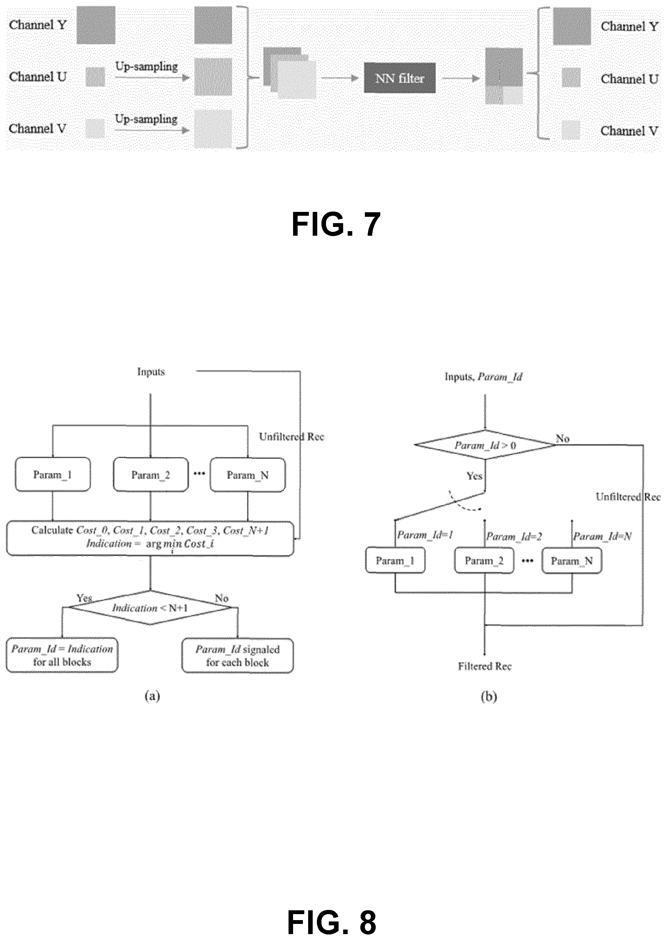

According to a variant embodiment of NNPF, the chroma component are pre-processed before being input to the NNPF. FIG. 7 is a block diagram illustrating an example of a chroma pre-processing according to one or more embodiments of the present disclosure. In the unified HOP filter of FIG.6, the filter with a single model is designed to process three components. Since the resolutions of luma and chroma are different, pre-processing steps are introduced to up-sample chroma components as shown in FIG. 7. For instance, in the resampling process, the nearest-neighbor interpolation method is used.

According to another variant embodiment of NNPF, the filter inference granularity may be adaptive. The granularity of the filter NNPF determination and the parameter selection is dependent on resolution and QP. Given a higher resolution and a larger QP, the determination and selection will be performed in a larger region. In addition, the basic inference size (set to 128 by default) and block extension (set to 8 by default) in the inference region could be be specified at encoder side.

According to another variant embodiment of NNPF, picture boundary may be padded. To mitigate the boundary artifacts and reduce distortion, inference block may be extended to include more samples from neighboring blocks. However, for inference blocks located at the picture boundary, neighboring blocks may not exist. In this case, the extended samples of inference block are padded with zero value.

According to another variant embodiment of NNPF, base QP may be adjusted. Each slice or block could determine whether to apply the CNN-based filter or not. When the CNN-based filter is determined to be applied to a slice/block, which conditional parameter from a candidate list including two candidates derived from QP could be further decided. Denote the sequence level QP as q, the candidate list includes conditional parameters {Param_1, Param_2}. For low temporal layers, Param_1 = q, Param_2 = q-5. For high temporal layers, Param_1 = q, Param_2 = q+5. In other words, the second candidate is different across different temporal layers.

FIG. 8(a) is a block diagram illustrating an example of NNPF parameter selection at encoder side. The selection process is based on the rate-distortion cost at the encoder side. Indication of on/off control as well as the conditional parameter index, if needed, are signalled in the bitstream. FIG. 8(a) shows the parameter selection of unified filter at encoder side. All blocks in the current frame need to be processed with all conditional parameters first. Then all costs, i.e. Cost_0, Cost_1, ..., Cost_N+1, are calculated and compared against each other to achieve optimum rate-distortion performance. In Cost_0, CNN-based filter is prohibited for all blocks. In Cost_i, {i = 1, 2, ..., N}, the parameter Param_i is used for all blocks. In Cost_N+1, different blocks may prefer different parameters, and the information regarding whether to use CNN-based filter or which parameter to be used is signaled for each block.

FIG. 8(b) is a block diagram illustrating an example of NNPF parameter selection at decoder side. At decoder side, whether to use CNN-based filter or which parameter to be used for a block is based on the Param_Id parsed from the bit-stream as shown in FIG. 8(b).

According to a variant of base QP adjustment for all-intra configuration, parameter selection is disabled while filter on/off control is still preserved. A shared conditional parameter is used for the two chroma components to ease the burden in worst case at decoder side. In addition, the max number of conditional parameter candidates, i.e. N, could be specified at encoder side (N = 2 by default).

In current implementation of the latest JVET development, the following parameters are used:
- param_1: do not use the CNN
- param_2: use CNN with qpOffset = 0;
- param_3: use one CNN with either qpOffset = -5 or +5

According to another variant embodiment of NNPF, NNLF outputs are blended with DBF outputs. Each sample filtered by the deblocking filter and by the NN filter are blended together via the following equation, where *R_{NN}* and *R_{DB}* refer to the outputs of NN filtering and deblocking filtering respectively, while w stands for the blending weight.${R}_{Refine} = w \times {R}_{NN} + \left(1-w\right) \times {R}_{DB}$

There are four candidates, i.e. 1, 0.75, 0.5 and adaptive weight, for the blending weight. The adaptive weight is derived using least square method and signaled for each color component in the slice header.

According to yet another variant embodiment of NNPF, the filtering may include a residual offset adjustment. When a NN filter is being applied to reconstructed pictures, a residual offset value is selected and signaled for each color component in the slice header. The offset value candidates are {1, 2}. The residual of NNLF's output is adjusted by reducing the magnitude of the residual at each pixel by this small offset value before being added to input samples.

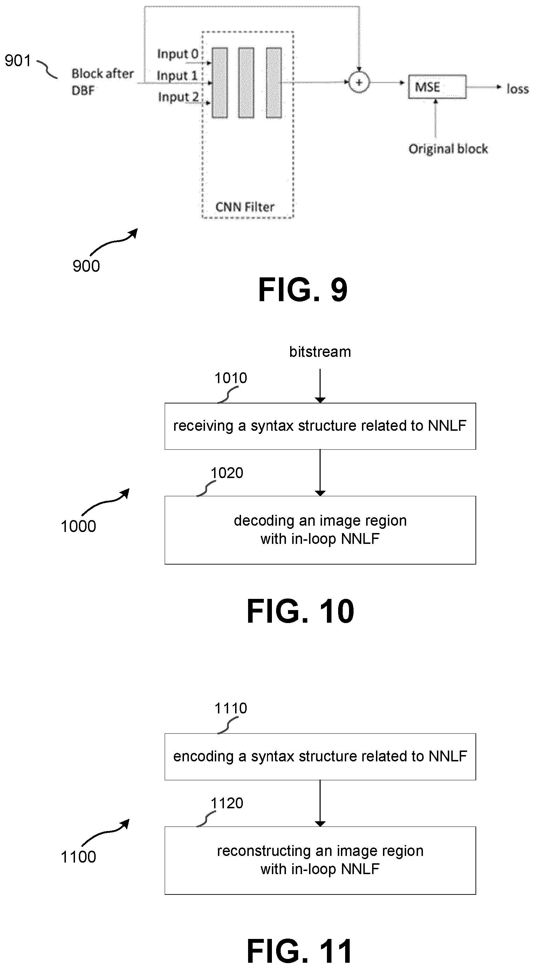

FIG. 9 is a block diagram illustrating an example of learning process of a NNPF. In the method 900 for training the CNN filter, a large dataset of blocks 901 is used to train the model with the inputs extracted from real encoding. Usually, the loss is computed as the MSE (Mean Square Error) or MAE (Mean Absolute Error).

In the current NNVC (Neural Network Video Codec), a syntax has already been proposed for Neural Network based filtering as, for example, described in Table 2.

**Table 2: Syntax of Neural network loop filter in recent development of NNVC**

| Neural network loop filter syntax | Descriptor |
|---|---|
| **sps_nnlf_enabled_flag** | u(1) |
| if( sps_nnlf_enabled_flag) { | |
| **sps_nnlf_model_id** | ue(v) |
| **sps_nnlf_unified_infer_size_base** | ue(v) |
| **sps_nnlf_unified_inf_size_ext** | ue(v) |
| **sps_nnlf_unified_max_num_prms** | ue(v) |
| } | |

Where the semantics of the syntax is as follows:
**sps_nnlf_enabled flag** equal to 1 specifies that neural network loop filter is enabled.
**sps_nnlf_model_id** provides an identifier for the model type used for neural netork loop filter among the NNLFUnfiedID list. HOPLOP is used for vlop1, lop2 and hop3 models as illustrated in table 3.

**Table 3: List of NNLF Unified ID**

| **NNLFUnifiedID** | Index |
|---|---|
| FILTERSET0 | 0 |
| FILTERSET1 | 1 |
| LOP1 | 2 |
| HOPLOP | 3 |
| LOP3 | 4 |
| HOP4 | 5 |
| HOP5 | 6 |
| UNDEFINED | 7 |

Besides, the syntax is
**sps_nnlf_unified_infer_size_base** specifies the size in width and height of the region processed by the NNLF.
**sps_nnlf_unified_inf_size_ext** specifies the size of the extension of the region processed by the NNLF.
**sps_nnlf_unified_max_num_prms** specifies the number of scaling Ids.

In the current design of loop-filter syntax in NNVC, many syntax elements might be coded, some are not used or are less probable. It is desirable to improve the signaling of loop-filter syntax to remove redundant information and to optimize the amount of syntax data signaled from an encoder to a decoder.

Accordingly, the present disclosure proposes a new NNLFUnifiedID list that put most probable identifiers at the beginning of the list. Besides, the present disclosure proposes a base size and an extension size of processing region that are set to fixed values which advantageously allows avoiding coding these parameters. In another embodiment, base size and extension size are coded in log2 instead of plain value to save some syntax bits.

FIG. 10 is a block diagram illustrating a decoding method 1000 according to one or more embodiments of the present disclosure. The method of FIG. 10 illustrates part of the decoding process of FIG. 3 or part of the in-loop filtering process of FIG. 5. The method of FIG. 10 implements the neural-network filter syntax described hereafter. Accordingly, in a step 1010, a syntax structure related to a neural-network loop-filter NNLF is received. The syntax structure comprises an identifier of a NNLF model type for the NNLF among a list of five NNLF model types. As mentioned above, the unified list of NNLF model type may be reduced and ordered for better coding efficiency. Variants of the syntax structure are described hereafter. Based on the identifier, a NNLF model type for the NNLF is determined and an inference of the NNLF using the determined NNLF model type, optionally with other NNLF parameters are used for in-loop filtering. In a step 1020, an image region is decoded which includes in-loop filtering using at least one filter as shown on FIG. 5, the at least one filter comprising the NNLF with the NNLF model type.

FIG. 11 is a block diagram illustrating an encoding method according to one or more embodiments of the present disclosure. The method of FIG. 11 illustrates part of the encoding process of FIG. 2 or of in-loop filtering process of FIG. 5. The method of FIG. 11 implements the neural-network filter syntax described hereafter. Accordingly, in a step 1110, a syntax structure related to a neural-network loop-filter NNLF is encoded and inserted in the bitstream. The syntax structure comprises an identifier of a NNLF model type for the NNLF among a list of five NNLF model types. Variants of the NNLF syntax structure are the same as for the decoding method and described hereafter. The NNLF model type for the NNLF is determined and an inference of the NNLF using the determined NNLF model type, optionally with other NNLF parameters are used for in-loop filtering. In a step 1120, an image region is reconstructed and may used as prediction in later encoding stage. The reconstruction includes in-loop filtering using at least one filter as shown on FIG. 5, the at least one filter comprising the NNLF with the NNLF model type.

### Feature(s) associated with Neural Network Loop-Filtering Syntax are provided herein.

According to a first variant embodiment, the list of NNLF model types is reduced to five elements. In the new NNLFUnifiedID list, filtersets 0 and 1 are removed and the NNLFUnifiedID list comprises model types known from NNVC as HOPLOP (or VLOP), LOP1, LOP3, HOP5, HOP4.

According to a variant embodiment, the five model types are ordered in the list from a less complex filter to a more complex filter, thus HOPLOP/VLOP is put in first position because Very Low Operation Point (VLOP) model which is the lightest model should have the lowest index to save some syntax. Then, Low Operation Point (LOP) should be added before High Operation Point (HOP) models, as shown in Table 4.

**Table 4: An example of new NNLFUnified list**

| **NNLFUnifiedID** | Index |
|---|---|
| HOPLOP | 0 |
| LOP1 | 1 |
| LOP3 | 2 |
| HOP5 | 3 |
| HOP4 | 4 |
| UNDEFINED | 5 |

According to an alternative variant embodiment, the five model types are ordered in the list from a more probable filter to a less probable filter. In this case, HOP models are put before LOP models, as shown in Table 5:

**Table 5: An example of new f NNLFUnified list**

| **NNLFUnifiedID** | Index |
|---|---|
| HOPLOP | 0 |
| HOP5 | 1 |
| HOP4 | 2 |
| LOP3 | 3 |
| LOP1 | 4 |
| UNDEFINED | 5 |

Note that index value of 5 is reserved for undefined filter and not taken into account in the count of five identified models in the NNLFUnified list.

According to a second variant embodiment, the syntax element **sps_nnlf_unified_infer_size_base** and **sps_nnlf_unified_inf_size_ext** are also signaled in the syntax structure. For instance, **sps_nnlf_unified_infer_size_base** and **sps_nnlf_unified_inf_size_ext** are coded in log2 instead of plain value. Accordingly, the syntax structure may comprise an indication specifying a size, in log 2 minus 2, in width and height of the image region processed by the NNLF. Simalarly, the syntax structure may comprises an indication specifying a size, in log 2 minus 2, in width and height of an extension of the image region processed by the NNLF. The syntax and semantics are modified as shown in Table 6 and below semantics:

**Table 6: An example of size coding with log2 value**

| Neural network loop filter syntax | Descriptor |
|---|---|
| **sps_nnlf_enabled_flag** | u(1) |
| if( sps_nnlf_enabled_flag) { | |
| **sps_nnlf_model_id** | ue(v) |
| **sps_log2_nnlf_unified_infer_size_base_minus_2** | ue(v) |
| **sps_log2_nnlf_unified_inf_size_ext_minus_2** | ue(v) |
| **sps_nnlf_unified_max_num_prms** | ue(v) |
| } | |

**sps_log2_nnlf_unified_infer_size_base_minus2** plus 2 specifies the size in width and height of the region processed by the NNLF.

The variables NNLFSizeBase is derived as follows: $NNLFSizeBase = sps _ log 2 _ nnlf _ unified _ infer _ size _ base _ minus 2 + 2$ $NNLFSizeBase = 1 ≪ NNLFSizeBase$ **sps_log2_nnlf_unified_inf_size_ext_minus2** plus 2 specifies the size of the extension of the region processed by the NNLF.

The variables NNLFSizeExt is derived as follows: $NNLFSizeExt = sps _ log 2 _ nnlf _ unified _ inf _ size _ ext _ minus 2 plus + 2$ $NNLFSizeExt = 1 ≪ NNLFSizeExt .$

According to another variant embodiment, NNLFSizeBase is set to a fixed value such as 128 or 256, and NNLFSizeExt is set to 8. The syntax elements **sps_nnlf_unified_infer_size_base** and **sps_nnlf_unified_inf_size_ext** are not coded in the SPS.

According to a third variant embodiment, the syntax structure further comprises an indication specifying a maximum number minus 1 of conditional scaling parameter candidates of the image region processed by the NNLF. As at least 1 scaling parameter is used, so **sps_nnlf_unified_max_num_prms** can be decreased by 1, the new syntax and semantic is: **sps_nnlf_unified_max_num_prms_minus1** + 1 specifies the number of scaling Ids.

An example of NNLF syntax structure combining the second and third variant embodiment is depicted in Table 7:

**Table 7: Combination of inference size and Scaling parameters embodiments**

| Neural network loop filter syntax | Descriptor |
|---|---|
| **sps_nnlf_enabled_flag** | u(1) |
| if( sps_nnlf_enabled_flag) { | |
| **sps_nnlf_model_id** | ue(v) |
| **sps_log2_nnlf_unified_infer_size_base_minus_2** | ue(v) |
| **sps_log2_nnlf_unified_inf_size_ext_minus_2** | ue(v) |
| **sps_nnlf_unified_max_num_prms_minus_1** | ue(v) |
| } | |

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. A bitstream that includes one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method for video decoding, the method comprising:
receiving a syntax structure related to a neural-network loop-filter NNLF, the syntax structure comprising an identifier of a NNLF model type for the NNLF among a list of five NNLF model types;
determining a NNLF model type for the NNLF based on the identifier; and
decoding an image region, wherein the decoding includes in-loop filtering using at least one filter, the at least one filter comprising the NNLF with the NNLF model type.

2. An apparatus comprising one or more processors, wherein the one or more processors are configured to:
receiving a syntax structure related to a neural-network loop-filter NNLF, the syntax structure comprising an identifier of a NNLF model type for the NNLF among a list of five NNLF model types;
determining a NNLF model type for the NNLF based on the identifier; and
decoding an image region, wherein to decode the image region the one or more processors perform in-loop filtering using at least one filter, the at least one filter comprising the NNLF with the NNLF model type.

3. A method for video encoding, the method comprising:
determining a neural-network loop-filter NNLF model type for a NNLF;
encoding a syntax structure related to a neural-network loop-filter NNLF, the syntax structure comprising an identifier of the NNLF model type for the NNLF among a list of five NNLF model types; and
reconstructing an image region, wherein the reconstructing includes in-loop filtering using at least one filter, the at least one filter comprising the NNLF with the NNLF model type.

4. An apparatus comprising one or more processors, wherein the one or more processors are configured to:
encode a syntax structure related to a neural-network loop-filter NNLF, the syntax structure comprising an identifier of a NNLF model type for the NNLF among a list of five NNLF model types;
determine a NNLF model type for the NNLF based on the identifier; and
reconstruct an image region, wherein to reconstruct the image region the one or more processors perform in-loop filtering using at least one filter, the at least one filter comprising the NNLF with the NNLF model type.

5. The method of any of claims 1 or 3 or the apparatus of any of claims 2 or 4, wherein the five model types are ordered in the list from a less complex filter to a more complex filter.

6. The method of claim 5 or the apparatus of claim 5, wherein the ordered list of five model types comprises a Very Low Operation Point VLOP model, a first Low Operation Point LOP1 model, a second Low Operation Point LOP3 model, a first High Operation Point HOP5 model, a second High Operation Point HOP4 model.

7. The method of any of claims 1 or 3 or the apparatus of any of claims 2 or 4, wherein the five model types are ordered in the list from a more probable filter to a less probable filter.

8. The method of claim 7 or the apparatus of claim 7, wherein the ordered list of five model types comprises a Very Low Operation Point VLOP model, a first High Operation Point HOP5 model, a second High Operation Point HOP4 model, a first Low Operation Point LOP3 model, a second Low Operation Point LOP1 model.

9. The method of any of claims 1, 3 or 5-8, or the apparatus of any of claims 2 or 4-8, wherein the syntax structure further comprises an indication specifying a size, in log 2 minus 2, in width and height of the image region processed by the NNLF.

10. The method of any of claims 1, 3 or 5-9, or the apparatus of any of claims 2 or 4-9, wherein the syntax structure further comprises an indication specifying a size, in log 2 minus 2, in width and height of an extension of the image region processed by the NNLF.

11. The method of any of claims 1, 3 or 5-8, or the apparatus of any of claims 2 or 4-8, wherein a size in width and height of the image region processed by the NNLF is fixed and set to 128 or 256.

12. The method of any of claims 1, 3,5-8, or 11, or the apparatus of any of claims 2, 4-8 or 11, wherein a size in width and height of an extension of the image region processed by the NNLF is set to 8.

13. The method of any of claims 1, 3, or 5-12 or the apparatus of any of claims 2 or 4-12, wherein the syntax structure further comprises an indication specifying a maximum number minus 1 of conditional scaling parameter candidates of the image region processed by the NNLF.

14. A bitstream comprising data representative of a coded image region of a video and data representative of a syntax structure related to a neural-network loop-filter NNLF, the syntax structure comprising an identifier of a NNLF model type for the NNLF among a list of five NNLF model types.
